# EUROPEAN PATENT SPECIFICATION

(11) **EP 3 259 859 B1**
(45) Date of publication and mention of the grant of the patent: **29.04.2026**
(21) Application number: 16708712.1
(22) Date of filing: 19.02.2016
(51) Int. Cl.: H04H 20/63, H04N 7/10

(54) **EXPANDABLE MODULAR GATEWAY UNIT**
ERWEITERBARE MODULARE GATEWAY-EINHEIT
UNITÉ PASSERELLE MODULAIRE EXTENSIBLE

(30) Priority: 19.02.2015 GB 201502800
(43) Date of publication of application: 27.12.2017
(73) Proprietor: Global Invacom Ltd., Stevenage, Hertfordshire SG1 2UG (GB)
(72) Inventor: GARY, Stafford, Stevenage Hertfordshire SG1 2UG (GB)
(74) Representative: Wood, Graham
(86) International application number: PCT/GB2016/050418
(87) International publication number: WO 2016/132142

(56) References cited:
- WO-A1-00/47029
- WO-A1-2014/087155
- US-A- 6 008 985
- US-A1- 2006 059 537
- US-A1- 2006 187 954

## Description

The invention to which this application relates is to improvements to apparatus which is used in the receipt and provision of digital data, such as for example, for data for use in television, radio and/or broadband and which can be sent to multiple users or apparatus.

Apparatus which can be used is typically referred to as a Gateway termination Unit (GTU) which is provided in order to allow feeds of data from a number of satellite data transmissions to be combined and distributed from the apparatus to a plurality of users. This therefore allows a premises such as, for example, a block of apartments to be provided with a plurality of different data feeds so as to allow a greater range of channels to be available for user selection, and for the data from each of the feeds to be combined and made available to a plurality of broadcast data receivers, each connected to one of a number of output sockets provided on the GTU which means that all of the received data is available for selection by each receiver connected to an output from the GTU.

Conventionally, the apparatus of this type is provided to have one or more data feeds by which the same can receive digital data representative of programme channels which can be user selected. Each of the feeds will carry a plurality of streams of data and the data is used to generate programmes which are selectable by the user. The plurality of feeds are combined within the apparatus and made available to each of the plurality of outputs via which the received data is emitted from the apparatus such that each output carries all of the received data.

At present, it is typically the case that the apparatus which is to be used at a particular location, will be provided in a relatively bespoke manner in that, for a particular installation, a particular configuration will be assembled and provided at the location of use. While this may be acceptable when the ongoing use of the apparatus is to be fixed, it means that the installer must ensure that they have the correct configuration of the apparatus for the particular location of use. It is also frequently the case that there will be a requirement to upgrade or increase the number of feeds which are provided to the apparatus and/or outputs required to be provided therefrom. Typically, if the upgrade or change is attempted, it is necessary to disconnect the existing apparatus and replace the apparatus with a new item which is appropriately configured and then connect the new item of apparatus in the required manner in order to meet the requirements of the new use.. It can also be expensive due to the need to replace the existing apparatus and provide a new item of apparatus in its place.

As the work requires the power to the existing unit to be switched off and remain switched off during the replacement and installation of the new apparatus so it, in turn, means that the services provided via the apparatus to the number of users, such as television and radio services, are suspended while the power to the apparatus is switched off. This is unacceptable to users who, typically, will be paying a subscription for the service and therefore would expect the service to be maintained at all times.

An aim of the present invention is to provide this type of apparatus in a form which allows the efficiency of operation to be maintained whilst allowing greater flexibility in the configuration of the apparatus and greater ability to alter the configuration of the apparatus whilst, at the same time, preventing or at least reducing the downtime of the service which is provided to the end users.

A further aim of the present invention is to achieve in a manageable and cost effective manner the meeting of the increasing demand for larger capacity systems which allows a larger number of channels to be available simultaneously to user locations connected to a receiving location.

US2006/0187954 discloses an expandable residential data transmission gateway for providing data to a number of devices at different user locations. WO0047029 discloses apparatus in which male ports which are not in use for connection to cables or other devices are biased to a retracted position within the apparatus housing and US2006059537 discloses a data apparatus housing in which unused sockets receive an insert therein.

In accordance with the invention, there is provided apparatus in the form of a base modular unit, one or more further modular units and a cap portion, said base modular unit includes a housing, a port for the connection of at least one data feed including data to allow the generation of video and/or audio for a plurality of television and/or radio programmes to be available from a plurality of output ports on the base modular unit, data combining means provided within the housing which allows the data received from the said data feed to be made available through each of the said output ports, the base modular unit includes a plurality of input connection ports to allow the transfer of data from one or more connected further modular units to the said base modular unit and the data combining means allow the data from the said one or more further modular units to also be available through the said output ports of the base modular unit, the base modular unit and one or more further modular units each receiving a said data feed, and said one or more further modular units being connected with the base modular unit in sequence and the data received by each of the said further modular units from the respective data feeds is successively combined and passed to the base modular unit via the connection of output ports of a further modular unit with the input connection ports of an adjacent further modular unit or the base modular unit wherein a cap portion is provided for selective engagement to a face of the base modular unit or face of the one or more further connected modular units which is located at the furthest distance from the face of the said base modular unit at which said plurality of output ports are provided such that said cap portion, when engaged to said face, masks the unused input connection ports located at said face so that only the plurality of output ports of the base modular unit remain uncovered regardless of the apparatus being used in any of a base modular unit only configuration, a base modular unit and one further modular unit configuration or base modular unit and a plurality of sequentially connected further modular units configuration, so that only said output ports from the base modular unit are available to be selectively attached to cables to allow the passage of data therefrom to one or more data processing apparatus to allow the generation of video and /or audio.

Typically the modular units include keying means to allow the correct mechanical connection of the respective modular units and hence the correct connection of the output ports of the further modular unit with the connection ports of the base modular unit.

In one embodiment the base modular unit has keying means at a face of the housing adjacent to the connection ports to allow the selective location of the further modular unit therewith.

In one embodiment the keying means comprise male members which protrude from one of the modular unit faces and female members provided on the other of the modular unit and respectively located so that the same engage when the modular units are brought together for connection of the respective ports.

In one embodiment the keying means are reversed in that on a face of one of the modular units there is provided a male member and a spaced apart female member and on the face of the other modular unit there is provided a female member and a spaced apart male member at opposing locations.

Typically each data feed is connected to provide data from one of satellite, cable, terrestrial and/or internet transmission systems.

Typically the number of data feeds to the apparatus is adapted by the addition, or removal of the said modular units with respect to the base module.

In one embodiment the outer surface of the modular unit is ribbed. Typically the ribs are provided in register on the respective base modular units and further modular units and when the same are joined together, the ribs are respectively aligned.

In one embodiment the output ports from the base modular unit are connected to the connecting cables therefrom to provide a substantially continuous data service therefrom whilst a further modular unit, or units are connected thereto.

Typically the apparatus is provided with support brackets, which, if only the base modular unit connect with the housing thereof to support the same.

In one embodiment at least a portion of each support bracket is movable with respect to the base modular unit in order to locate with and support one or more further modular units when connected with the base modular unit.

In one embodiment the base modular unit and further modular units each have the output ports located on a first face of the housing and the connecting ports are provided on a second face of the housing.

In one embodiment the base modular unit has a number of connection ports and each of the further modular units has a matching number of output ports and a matching number of connection ports.

Typically Digital Satellite Equipment Control (DiSEqC) connection is provided between the modules so as to allow communication between the same.

In accordance with the invention the connection between the connection ports and output ports of the respective modular units is a direct connection with no cabling required. Typically the output and connection ports are provided as plug and socket connections.

In one embodiment the output ports are provided as female or male connectors and the connection ports are provided as the other of female or male connectors.

In one embodiment all of the data from the date feeds to the one or modular units is available from all of the output ports of the base modular unit.

Typically the received data is provided to allow the generation of television and/or radio programmes from a plurality of channels and all of the said channels data which are received by the modular units is made available from each of the outputs of the base modular unit.

In an alternative embodiment the data from the data feeds which is provided to allow the generation of television and/or radio programmes from a plurality of channels is passed to processing means in at least the base modular unit and which generate a subset of the channels and it is the data for the subset of channels which is made available from the output ports of the base modular unit. In one embodiment the selection of the channels in the subset of channels is made dependent upon the user channel selections which are made at that time.

In this embodiment the processing means destacks the received data and then translates the data into a digital format and makes the subset of channels available from each of the output ports.

Typically the data feeds are made available to the output ports of the base modular unit by connecting the base modular unit and further modular units in cascade.

The invention provides a Gateway termination Unit (GTU) for receiving and distributing data to a plurality of user apparatus, said GTU formed with a base modular unit having a satellite data feed and a plurality of output ports therefrom and a plurality of connection ports to allow data to pass between the base modular unit and a further modular unit via the connection of the connection ports of the base modular unit with output ports of the further modular unit and wherein the said further modular unit has a further satellite data feed and the data from which is passed to the base modular unit to be combined and made available from the output ports of the base modular unit.

Typically all of the sets of connection ports and output ports are provided in the same configuration at least on the further modular units.

In one embodiment the said modular units are connected in series and the number of modular units which are provided in connection are selected so as to provide apparatus of the required capacity and configuration.

The apparatus therefore allows a user at each of the user locations to independently select to receive data for one or more channels at their location and by connecting a first data input to a base modular unit in which the data is split so as to be available from a plurality of output connection ports on the base modular unit, providing on the base modular unit a plurality of input connection ports for the selective connection to output ports of a further modular unit.

In one embodiment, the keying means comprise a male member which protrudes from one of the module unit faces and a female member provided in an adjacent module unit which receives the male member.

In one embodiment, keying means may be provided at spaced locations at the interface the respective module units and may be reversed in that one of the faces has a male member and a spaced apart female member and the other of the interface faces has a female member and a spaced apart male member. Sufficient keying means will be provided so as to provide mechanical location between the respective modules at the interface and act to, firstly, provide assurance that the modules, and the connections on the interface thereof, are brought into engagement in the correct orientation, so as to ensure that the connection and passage of data between the modules is correct, and secondly, once the modules have been secured together, the keying means act to provide further mechanical support.

Typically, as the output connections are provided on the base module unit, then further module units can be connected with the base unit via the connection means without the need to disconnect the output connections. This therefore means that a new module, with a further data feed, can be added to the apparatus with relatively minimal disruption to the operation of the apparatus itself and, more importantly, minimal disruption to the service provided to the users.

In another embodiment, the additional modules may not have a satellite feed provided but, instead, the additional modules can be provided to allow additional stacking of the data feeds to the other modules to be achieved. In one embodiment multiple broadcast data receivers can be connected so as to be provided with data from a single output.

Typically, the connections to the outputs can be selected so as to suit particular user requirements at that location.

Typically the said modules are connected in series and the number of modules which are provided in connection are selected so as to provide apparatus of the required capacity and configuration.

In one embodiment the data is made available in an optical format for at least part of the data distribution path to a number of user locations each of which has means for the user to select to receive data for one or more channels.

In one embodiment the processing modules within a module include a first processing means connected to a second processing means and the first processing means which destacks and translates the received data into predetermined frequencies which are known to be able to be processed by the second processing means.

In one embodiment the second processing means translates the data into a digital format and makes the same available to be output from the module to another module if connected thereto or to the plurality of users.

In one embodiment a subset of channels which match those which have been selected by users at their respective locations are provided from the output of the base module.

In one embodiment the received satellite data content is carried from the antenna and LNB along an optical fibre distribution network to the module input.

In one embodiment the apparatus to distribute the data includes an optical detector to detect the optical signals from the fibre optic distribution network, a digital channel-stacking switch module and multiple output ports for connection to cables to send the signals in a form expected to be received by the broadcast data receivers at the respective user locations. In one embodiment this said apparatus is incorporated in a single base unit.

In one embodiment content from additional transmitters such as additional satellites are made available by connecting the modules in a cascade manner.

In one embodiment the apparatus includes an optical LNB that takes the four bands of data received from a satellite and stacks them so that they occupy a band from 950MHz to 5.45GHz which is then modulated onto a laser to allow optical fibre distribution of the received signals.

There is provided a method of data distribution for a plurality of television and/or radio channels, said method comprising the steps of; receiving at a receiving location data for the range of said television and/or radio channels, distributing said data via a distribution network to a plurality of user locations connected thereto, allowing a user at each of the user locations to independently select to receive data for one or more channels at their location and characterised by connecting a first data input to a base module in which the data is combined so as to be available from a plurality of output connection ports on the base module, providing on the base module a plurality of input connection ports for the selective connection to output ports of a further module.

A method of use includes the steps of providing at least one further module with a second data feed connected thereto, and making that data feed available to a number of output ports thereon, and connecting the said output ports to the input ports of the base module so as to allow the data from the second data feed to be available, in combination with the data from the first data feed from the output ports of the base module.

The method includes the steps of adding further modules to allow each of the available data feeds to be made available from the output ports of the base module.

The method includes the steps of connecting the respective modules together in a sequential series.

Specific embodiments of the invention are now described with respect to the accompanying drawings, wherein
Figure 1 illustrates an elevation of a base or first module in accordance with one embodiment of the invention;
Figure 2 illustrates a cap portion in accordance with one embodiment of the invention;
Figures 3a and b illustrate perspective and elevation views of the module and cap portion of Figures 1 and 2 joined together;
Figure 4 illustrates a further module joined to the assembly of Figures 3a and b;
Figure 5 illustrates schematically a distribution system with which the apparatus in accordance with the invention can be used; and
Figure 6 illustrates schematically the flow of data through a plurality of modular units in accordance with one embodiment of the invention.

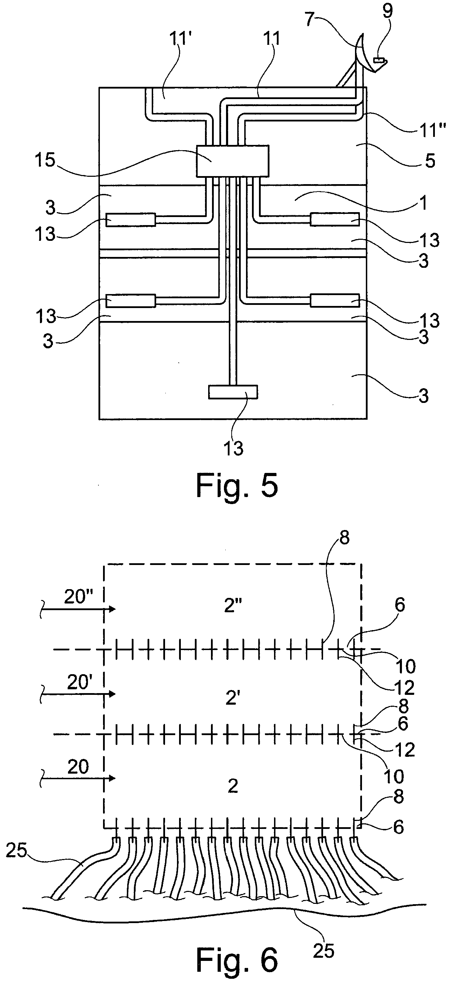

Referring firstly to Figure 5 there is illustrated a distribution system 1 which allows data for a range of television and radio channels to be provided to a plurality of user locations 3 with broadcast data receivers 13, such as for example in an apartment block 5. The distribution system is shown in an enlarged scale for ease of illustration. The data is received at the building from a satellite broadcast system via antenna 7 and LNB 9 mounted therewith. The received data is passed as a data feed 11 which may be optical along fibre optic cables and this then needs to be distributed so that the same data can be made available to each of the user locations 3. This is achieved by using apparatus in the form, for example, of a gateway Termination Unit (GTU) 15 which is formed in accordance with the invention. As the proliferation of available channels and services increases so there is increasingly more than one data feed 11, 11', 11" which is received from the same antenna and LNB or from further antenna and/or LNB or via alternative transmission systems. The provision of these additional data feeds and the retrospective addition of the data feeds to existing apparatus can be taken into account by the GTU 15 in accordance with the invention by allowing the same to be incrementally adapted to receive further data feeds, which may be in optical format, and for this to be done without adversely affecting the service which is being provided to the users 3 as the adaptation of the GTU is being performed, as will now be described.

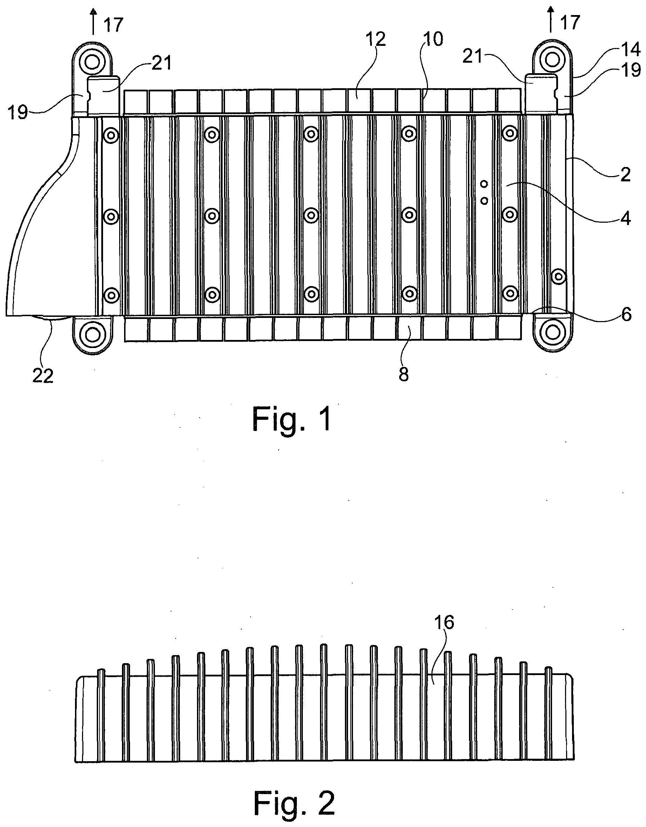

There is provided in accordance with the invention a modular GTU assembly 15 to allow the combination of data from one or more data feeds and the distribution of the data to a plurality of users connected thereto. Figure 1 illustrates a base modular unit 2 although it should be appreciated that in one embodiment the base modular unit and further modular units which are used in combination therewith are of the same configuration.

The base modular unit 2 includes a ribbed housing and at a first face 6, a series of output ports 8 are provided and at the opposing face 10, a series of connection ports 12 are provided. A data feed socket 22 is also provided to allow the modular unit to receive data from a data feed such as that from the LNB. The data feed socket 22 is connected to combining means within the housing to allow the data therefrom to be combined and passed to be available from each of the output ports 8. The ribs are provided to allow cooling of the apparatus to be improved.

The connection ports 12 are connected within the housing to the output ports 8 so as to allow the combination and passage of data therebetween.

In one embodiment the data processing and combining means are those as described in the applicant's co-pending application GB1321331.9, the contents of which are included herein.

The base modular unit 2 includes a power supply 27 to power the operation of the same when used independently or if used in combination with further modular units, the power supply 27 is passed to each of the other modular units so that only the one, common power supply is required to operate all of the modular units.

The number of modular units which are connected together can be selected at the initial time of installation to suit operating requirements and can be changed as the number of data feeds which are to be accommodated increases or decreases by adding or removing a modular unit per data feed. This can be achieved without the need to disconnect the data distribution network and therefore maintains the existing service to the users until the adapted service is provided once the adaptation of the GTU has been achieved.

The formation of each of the output ports 8 and connecting ports 12 of the modular units match in number and form so that the same can be connected directly in a plug and socket arrangement by pushing the modular units together to bring face 6 of a further modular unit into engagement with face 10 of the base modular unit or a further modular unit. This therefore means that the connection between the connection ports and output ports of the respective modular units is a direct connection with no cabling required and with no other apparatus required to be provided intermediate the modular units.

Thus when a set of connection ports 12 of a first module are brought into connection with a set of output ports 8 of another modular unit the same are mechanically and electrically engaged to allow the flow of data therebetween. Typically therefore the connection ports on a modular unit are provided as one of a male plug or female socket form and the output ports of the same modular unit are provided as the other of the male plug or female socket form and the configuration of the plugs and sockets are the same.

An attachment bracket 14 is provided to allow the attachment of the module to a support surface and arm portions 19 of the bracket are slidingly movable as indicated by arrow 17 with in order to allow the bracket to be increased in length so as to provide greater support when a number of the modular units are joined together.

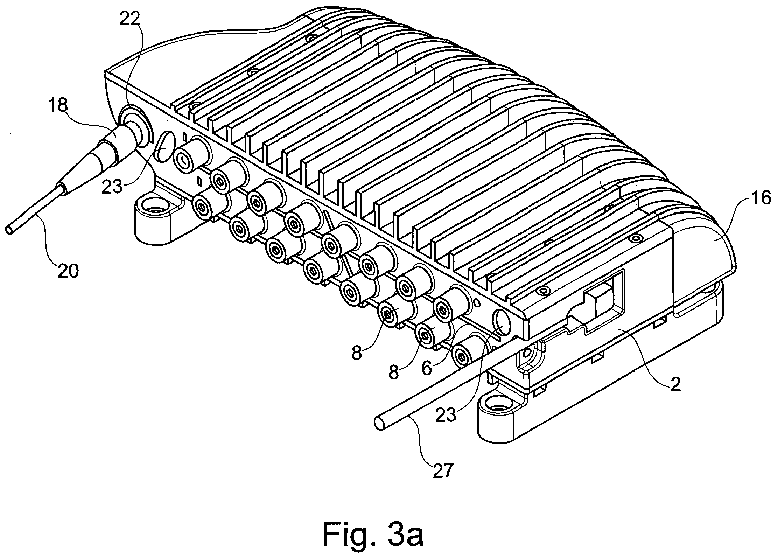

A cap portion 16 is shown in Figure 2 and this can be selectively attached to the modular unit with exposed connecting ports 12 when no further modular unit is to be fitted thereto and thereby allow the connection ports to be located within the cap portion 16 and therefore prevented from being damaged. This is illustrated in Figures 3a-4

The housing of the base modular unit also includes keying means which allow mechanical location of the respective modular units when connected and which ensure that the modular units can only be connected in a manner which ensures that the data connection is done correctly and thereby prevents damage to the plugs and sockets of the ports. In one form the keying means include male members 21 on the face 10 of the first modular unit which are received in respective apertures 23 provided in the face 6 of the modular unit which is to be connected to the first modular unit.

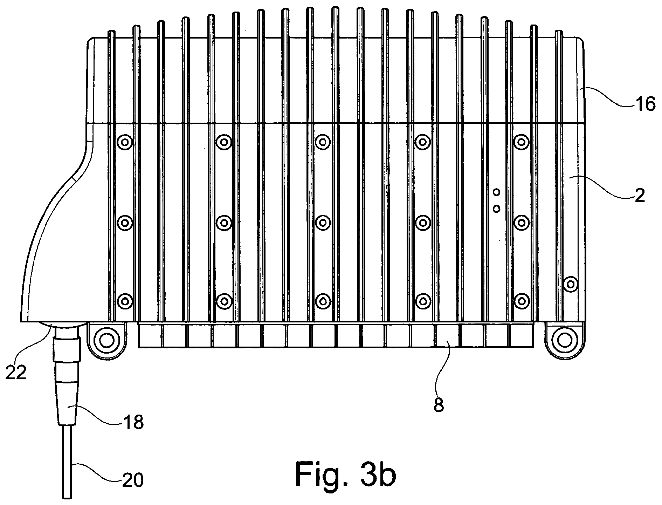

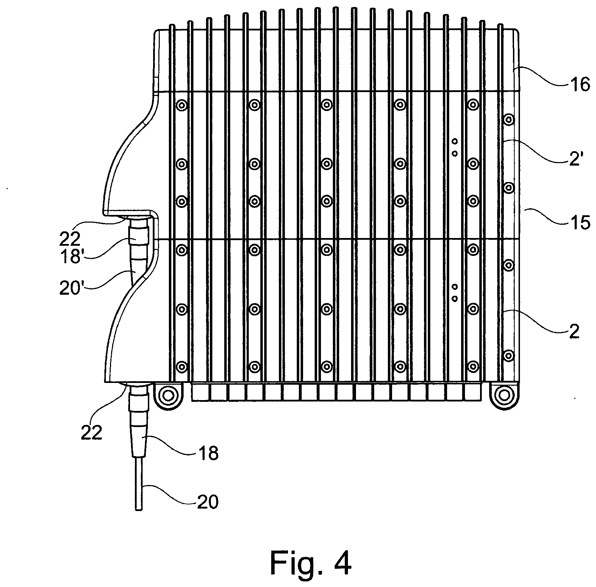

Figures 3a and b illustrate the base modular unit 2 of Figure 1 engaged with the cap portion 16 of Figure 2 and also includes the end plug 18 and part of the data feed cable 20 from the LNB or other data feed source. The plug 18 is received in the socket 22 in the modular unit. The data feed cable can be from any data source such as a feed of data received from a satellite broadcast system. Each of the modular units 2,2' will typically have a data feed connected thereto as is illustrated in Figure 4 which shows the base modular unit 2 in connection with a further modular unit 2' so that two data feeds 20,20' are provided to the assembly 15.

The data from each data feed 20,20' passes into the respective modular unit 2, 2' and the data is combined and passed to be available from each of the output ports 8 in that modular unit, with, in the embodiment shown, sixteen output ports being provided. The further modular unit 2' is joined to the base modular unit by attaching the respective output ports 8 of the further modular unit 2' with the connection ports 12 of the base modular unit 2 and so all of the data from the data feed 20' is passed to be combined with the data from the data feed 20 in base modular unit 2 and can be made available via the output ports 8 of the module 2. This configuration, including the addition of yet further modules can be achieved at the time of installation or may be adapted at a later time by adding the further modular units to allow further data feeds to be added and combined in the manner described. Furthermore, these further modular units can be added while power is still being supplied to the apparatus and hence the service to user's apparatus which is connected to the outputs 8 is maintained during the reconfiguration.

As illustrated schematically in Figure 6 the combining means of each connected modular unit, three of which are illustrated in Figure 6 (2,2',2") allow data received by each modular unit from respective data feeds 20,20',20" to be processed, typically via an integrated circuit provided in the modular unit and as described in the co-pending application. Thus from the modular unit 2" furthest removed from the base modular unit 2, the data received from data feed 20" is passed from the same via output ports 8 on that modular unit 2" and connection ports 12 on the modular unit 2' and is combined with data received by the modular unit 2' from data feed 20' and then the combined data from these further modular units 2", 2' is passed to the base modular unit 2 via output ports 8 on the modular unit 2' and the connection ports 12 on the base modular unit 2 and combined with the data received from data feed 20 so that each of the output ports 8 of the base modular unit can have available all of the data from feeds 20, 20', 20" which has been received by all of the modular units 2, 2',2" and which is available to be supplied by each output to the connected user locations 3 via respective cables 25. In one embodiment all of the data is passed through each output but, more typically, the data which actually leaves each output port 8 is only that which is required to generate a selected programme which has been selected by a user at the particular use location connected to the particular port. The selection is typically made by the user using control means and via the receiver 13 which sends a signal to the GTU for the data which is required to allow the particular programme to be generated by the receiver apparatus connected to that particular output port of the apparatus. Typically the selection is represented by a signal which is passed from the receiver apparatus (which typically receives a remote control signal from the device operated by the user in a conventional manner) and the signal passes along the cable connection from the receiver apparatus to the output at the base modular unit 2 which then identifies the particular stream or streams of the received data required to be obtained to allow the generation of the particular programme and that is transmitted to the receiver apparatus in the return path from the output port.

Thus, in one embodiment, at any given time different data for different programmes, can be being sent from each of the output ports 8 of the apparatus in accordance with the invention.

## Claims

1. Apparatus (15) in the form of a base modular unit, one or more further modular units (2'; 2") and a cap portion (16), said base modular unit (2) includes a housing, a port for the connection of at least one data feed (11;11';11"; 20, 20', 20") including data to allow the generation of video and/or audio for a plurality of television and/or radio programmes to be available from a plurality of output ports (8) on the base modular unit (2), data combining means provided within the housing which allows the data received from the said data feed (11;11';11"; 20, 20', 20") to be made available through each of the said output ports (8), the base modular unit (2) includes a plurality of input connection ports (12) to allow the transfer of data from one or more connected further modular units (2'; 2") to the said base modular unit (2) and the data combining means allow the data from the said one or more further modular units (2'; 2") to also be available through the said output ports (8) of the base modular unit (2), the base modular unit (2) and one or more further modular units (2',2") each receiving a said data feed (11;11';11"; 20, 20', 20"), and said one or more further modular units (2', 2") being connected with the base modular unit (2) in sequence and the data received by each of the said further modular units (2', 2") from the respective data feeds (11;11';11"; 20, 20', 20") is successively combined and passed to the base modular unit (2) via the connection of output ports (8) of a further modular unit with the input connection ports (12) of an adjacent further modular unit or the base modular unit wherein a cap portion (16) is provided for selective engagement to a face (10) of the base modular unit (2) or face (10) of the one or more further connected modular units (2',2") which is located at the furthest distance from the face (6) of the said base modular unit (2) at which said plurality of output ports (8) are provided such that said cap portion (16), when engaged to said face (10), masks the unused input connection ports (12) located at said face (10) so that only the plurality of output ports (8) of the base modular unit (2) remain uncovered regardless of the apparatus being used in any of a base modular unit only configuration, a base modular unit and one further modular unit configuration or base modular unit and a plurality of sequentially connected further modular units configuration, so that only said output ports (8) from the base modular unit are available to be selectively attached to cables (25) to allow the passage of data therefrom to one or more data processing apparatus (13) to allow the generation of video and /or audio.

2. Apparatus according to claim 1 **characterised in that** each data feed (11;11';11"; 20, 20', 20") is connected to provide data from one of satellite, cable, terrestrial and/or internet transmission systems.

3. Apparatus according to claim 1 **characterised in that** the number of output ports (8) which are provided from the base modular unit (2) is up to 16.

4. Apparatus according to claim 1 **characterised in that** the output ports (8) from the base modular unit are connected to connecting cables (25) therefrom to provide a substantially continuous data service therefrom whilst a further modular unit, or units (2', 2") are connected thereto.

5. Apparatus according to claim 1 **characterised in that** the base modular unit (2) and further modular units (2', 2") each have the output ports (8) located on a first face (6) of the housing and the input connection ports (12) are provided on a second face (10) of the housing.

6. Apparatus according to claim 1 **characterised in that** the output ports (8) and input connection ports (12) are provided as plug and socket connections.

7. Apparatus according to claim 1 **characterised in that** the data is provided to allow the generation of television and/or radio programmes from a plurality of channels and all of the said channels data which are received by the modular units (2,2',2") is made available from each of the output ports (8) of the base modular unit (2).

## Patentansprüche

1. Vorrichtung (15) in der Form einer modularen Basiseinheit, einer oder mehrerer weiterer modularer Einheiten (2'; 2") und eines Kappenteils (16), wobei die genannte modulare Basiseinheit (2) Folgendes beinhaltet: ein Gehäuse, einen Anschluss zum Anschließen mindestens einer Datenzuleitung (11; 11'; 11"; 20, 20', 20"), die Daten beinhaltet, um zu ermöglichen, dass die Erzeugung von Video und/oder Audio für eine Mehrzahl von Fernseh- und/oder Radiosendungen von einer Mehrzahl von Ausgangsanschlüssen (8) an der modularen Basiseinheit (2) verfügbar ist, in dem Gehäuse bereitgestellte Datenkombinierungsmittel, was ermöglicht, dass die aus der genannten Datenzuleitung (11; 11'; 11"; 20, 20', 20") empfangenen Daten durch jeden der genannten Ausgangsanschlüsse (8) verfügbar gemacht werden, wobei die modulare Basiseinheit (2) eine Mehrzahl von Eingangsverbindungsanschlüssen (12) zum Ermöglichen der Datenübertragung von einer oder mehreren angeschlossenen weiteren modularen Einheiten (2'; 2") an die genannte modulare Basiseinheit (2) beinhaltet und die Datenkombinierungsmittel ermöglichen, dass die Daten aus der bzw. den genannten einen oder mehreren weiteren modularen Einheiten (2'; 2") auch durch die genannten Ausgangsanschlüsse (8) der modularen Basiseinheit (2) verfügbar sind, wobei die modulare Basiseinheit (2) und eine oder mehrere weitere modulare Einheiten (2', 2") jeweils eine genannte Datenzuleitung (11; 11'; 11"; 20, 20', 20") empfangen und die genannte(n) eine oder mehreren weiteren modularen Einheiten (2', 2") der Reihe nach mit der modularen Basiseinheit (2) verbunden sind und die von jeder der genannten weiteren modularen Einheiten (2', 2") aus den jeweiligen Datenzuleitungen (11; 11'; 11"; 20, 20°, 20") empfangenen Daten nacheinander kombiniert und über die Verbindung von Ausgangsanschlüssen (8) einer weiteren modularen Einheit mit den Eingangsverbindungsanschlüssen (12) einer angrenzenden weiteren modularen Einheit oder der modularen Basiseinheit an die modulare Basiseinheit (2) weitergeleitet werden, wobei ein Kappenteil (16) zum selektiven Eingriff mit einer Seitenfläche (10) der modularen Basiseinheit (2) oder einer Seitenfläche (10) der einen oder mehreren weiteren angeschlossenen modularen Einheiten (2', 2") bereitgestellt ist, die sich an der größten Entfernung von der Seitenfläche (6) der genannten modularen Basiseinheit (2) befindet, an der die genannte Mehrzahl von Ausgangsanschlüssen (8) bereitgestellt ist, so dass der genannte Kappenteil (16), wenn mit der genannten Seitenfläche (10) in Eingriff gebracht, die unbenutzten Eingangsverbindungsanschlüsse (12), die sich an der genannten Seitenfläche (10) befinden, abdeckt, so dass nur die Mehrzahl von Ausgangsanschlüssen (8) der modularen Basiseinheit (2) unbedeckt bleiben, ungeachtet dessen, ob Vorrichtung in einer von einer Konfiguration mit nur der modularen Basiseinheit, einer Konfiguration mit einer modularen Basiseinheit und einer weiteren modularen Einheit oder einer Konfiguration mit einer modularen Basiseinheit und einer Mehrzahl von nacheinander angeschlossenen weiteren modularen Einheiten verwendet wird, so dass nur die genannten Ausgangsanschlüsse (8) von der modularen Basiseinheit zum selektiven Anbringen an Kabeln (25) verfügbar sind, um das Weiterleiten von Daten davon zu einer oder mehreren Datenverarbeitungsvorrichtungen (13) zu ermöglichen, um die Erzeugung von Video und/oder Audio zu ermöglichen.

2. Vorrichtung nach Anspruch 1, **dadurch gekennzeichnet, dass** jede Datenzuleitung (11; 11'; 11"; 20, 20', 20") zum Bereitstellen von Daten von einem von Satelliten-, Kabel-, terrestrischen und/oder Internet-Übertragungssystemen angeschlossen ist.

3. Vorrichtung nach Anspruch 1, **dadurch gekennzeichnet, dass** die Anzahl von Ausgangsanschlüssen (8), die von der modularen Basiseinheit (2) bereitgestellt werden, bis zu 16 ist.

4. Vorrichtung nach Anspruch 1, **dadurch gekennzeichnet, dass** die Ausgangsanschlüsse (8) von der modularen Basiseinheit mit Verbindungskabeln (25) davon verbunden sind, um einen im Wesentlichen kontinuierlichen Datendienst davon bereitzustellen, während (eine) weitere modulare Einheit oder Einheiten (2', 2") damit verbunden wird bzw. werden.

5. Vorrichtung nach Anspruch 1, **dadurch gekennzeichnet, dass** bei der modularen Basiseinheit (2) und weiteren modularen Einheiten (2', 2") sich jeweils die Ausgangsanschlüsse (8) auf einer ersten Seitenfläche (6) des Gehäuses befinden und die Eingangsverbindungsanschlüsse (12) auf einer zweiten Seitenfläche (10) des Gehäuses bereitgestellt sind.

6. Vorrichtung nach Anspruch 1, **dadurch gekennzeichnet, dass** die Ausgangsanschlüsse (8) und Eingangsverbindungsanschlüsse (12) als Steckverbindungen bereitgestellt sind.

7. Vorrichtung nach Anspruch 1, **dadurch gekennzeichnet, dass** die Daten bereitgestellt werden, um die Erzeugung von Fernseh- und/oder Radiosendungen von einer Mehrzahl von Kanälen zu ermöglichen und sämtliche der genannten Kanaldaten, die durch die modularen Einheiten (2, 2', 2") empfangen werden, von jedem der Ausgangsanschlüsse (8) der modularen Basiseinheit (2) her verfügbar gemacht werden.

## Revendications

1. Appareil (15) sous la forme d'une unité modulaire de base, d'une ou de plusieurs unités modulaires supplémentaires (2' ; 2") et d'une portion capuchon (16), ladite unité modulaire de base (2) incluant un logement, un port pour la connexion d'au moins un flux de données (11 ; 11' ; 11" ; 20, 20' ; 20") incluant des données pour permettre la génération de vidéo et/ou d'audio pour une pluralité de programmes de télévision et/ou de radio destinés à être disponibles à partir d'une pluralité de ports de sortie (8) sur l'unité modulaire de base (2), des moyens de combinaison de données étant prévus au sein du logement qui permettent aux données reçues à partir dudit flux de données (11 ; 11' ; 11" ; 20, 20' ; 20") d'être mises à disposition par l'intermédiaire de chaque port desdits ports de sortie (8), l'unité modulaire de base (2) incluant une pluralité de ports de connexion d'entrée (12) pour permettre le transfert de données à partir des une ou plusieurs unités modulaires connectées (2' ; 2") vers ladite unité modulaire de base (2) et les moyens de combinaison de données permettant aux données provenant desdites une ou plusieurs unités modulaires supplémentaires (2' ; 2") d'être également disponibles par l'intermédiaire desdits ports de sortie (8) de l'unité modulaire de base (2), l'unité modulaire de base (2) et une ou plusieurs unités modulaires supplémentaires (2, 2") recevant chacune un ledit flux de données (11 ; 11' ; 11" ; 20, 20' ; 20"), et lesdites une ou plusieurs unités modulaires supplémentaires (2, 2") étant connectées avec l'unité modulaire de base (2) en séquence et les données reçues par chaque unité desdites une ou plusieurs unités modulaires supplémentaires (2, 2") en provenance des flux de données respectifs (11 ; 11' ; 11" ; 20, 20' ; 20") étant successivement combinées et passées à l'unité modulaire de base (2) via la connexion des ports de sortie (8) d'une unité modulaire supplémentaire avec les ports de connexion d'entrée (12) d'une unité modulaire supplémentaire adjacente ou de l'unité modulaire de base, dans lequel une portion capuchon (16) est prévue pour une mise en prise sélective avec une face (10) de l'unité modulaire de base (2) ou une face (10) de ces une ou plusieurs unités modulaires supplémentaires connectées (2', 2") qui est située à la distance la plus éloignée par rapport à la face (6) de ladite unité modulaire de base (20) au niveau de laquelle ladite pluralité de ports de sortie (8) sont prévus de telle sorte que ladite portion capuchon (16), lorsqu'elle est en prise avec ladite face (10), masque les ports de connexion d'entrée inutilisés (12) situés au niveau de ladite face (10) de sorte que seule la pluralité de ports de sortie (8) de l'unité modulaire de base (2) reste non couverte indépendamment du fait que l'appareil est utilisé dans n'importe quelle configuration parmi une configuration d'unité modulaire de base seule, une configuration avec une unité modulaire de base et une unité modulaire supplémentaire ou une configuration avec l'unité modulaire de base et une pluralité d'unités modulaires supplémentaires connectées séquentiellement, de sorte que seuls lesdits ports de sortie (8) de l'unité modulaire de base soient disponibles pour être attachés sélectivement à des câbles (25) pour permettre le passage de données depuis ceux-ci vers un ou plusieurs appareils de traitement de données (13) pour permettre la génération de vidéo et/ou d'audio.

2. Appareil selon la revendication 1 **caractérisé en ce que** chaque flux de données (11 ; 11' ; 11" ; 20, 20' ; 20") est connecté pour fournir des données provenant d'un système de transmission parmi les systèmes de transmission suivants : par satellite, par câble, terrestre et/ou internet.

3. Appareil selon la revendication 1 **caractérisé en ce que** le nombre de ports de sortie (8) qui sont fournis à partir de l'unité modulaire de base (2) va jusqu'à 16.

4. Appareil selon la revendication 1 **caractérisé en ce que** les ports de sortie (8) à partir de l'unité modulaire de base sont connectés à des câbles de connexion (25) depuis ceux-ci afin de fournir un service de données substantiellement continu depuis ceux-ci alors qu'une unité, ou des unités modulaire/s supplémentaire/s (2', 2") sont connectées à ceux-ci.

5. Appareil selon la revendication 1 **caractérisé en ce que** l'unité modulaire de base (2) et les unités modulaires supplémentaires (2', 2") ont chacune des ports de sortie (8) qui sont situés sur une première face (6) du logement et les ports de connexion d'entrée (12) sont prévus sur une deuxième face (10) du logement.

6. Appareil selon la revendication 1 **caractérisé en ce que** les ports de sortie (8) et les ports de connexion d'entrée (12) sont prévus sous la forme de connexions à fiche et prise.

7. Appareil selon la revendication 1 **caractérisé en ce que** les données sont fournies pour permettre la génération de programmes de télévision et/ou de radio à partir d'une pluralité de canaux et la totalité desdites données de canaux, qui sont reçues par les unités modulaires (2, 2', 2"), sont mises à disposition à partir de chaque port des ports de sortie (8) de l'unité modulaire de base (2).
